# EUROPEAN PATENT APPLICATION

(11) **EP 1 348 332 A1**
(43) Date of publication of application: **01.10.2003**
(21) Application number: 02076550.9
(22) Date of filing: 27.03.2002
(51) Int. Cl.: A01J 5/017, A01K 1/12

(54) **Milking device**

(71) Applicant: Prolion B.V., 2140 AA Vijfhuizen (NL)
(72) Inventor: Dessing, Jacobus Petrus Maria, 2134 EM Hoofddorp (NL)
(74) Representative: Uittenbogaart, Gustaaf Adolf

(57) **Abstract**

The invention relates to a device for automatically milking animals. According to the invention, the drives and the control unit of the milking device are coupled to a DC power supply (20,21) for supplying direct current from batteries, so that the device can continue to operate without problems in the event of a power failure.

## Description

The invention relates to a device in accordance with the preamble of Claim 1. Devices of this type are known, inter alia, in dairy farms where the farm is at a considerable distance from distribution stations in the electricity grid and there is a considerable risk of the power supply from the electricity grid being interrupted. If the power is interrupted during automatic milking, problems arise as a result of data possibly being lost and safety features being switched on, which can only be switched off again after laborious procedures have been undertaken. In the event of a prolonged power failure, other problems arise, since motors which drive the vacuum pump, for example, likewise do not operate. As a result, after a certain time the vacuum is lost from the system, so that milking cannot be continued. Motors which are used for cooling the milk and for pumping the milk can also no longer be switched on. The system for cleaning the installation will also no longer function, since the circulation pumps do not operate and the boiler for heating cleaning liquid also often operates electrically. This may give rise to undesirable growth of bacteria in the milk pipes.

In the case of milking in traditional situations, in which the animals are milked two or three times a day in the presence of an operator, the operator will take the required measures in the event of a power failure, for example by interrupting milking for a certain time. In the event of a prolonged problem in the electricity grid, the operator will if necessary switch on a standby power unit or will couple the vacuum pump to the tractor in order to generate the vacuum required during milking. If animals are being milked automatically, which has to be able to continue without interruption throughout the day, there is often no operator present in the event of a fault in the electricity grid. The control unit is then generally provided with a standby supply, so that the system can be made safe for the animals and milking can be stopped. At the same time, the operator is called, and, after he has assessed the situation, the operator will take the measures which he deems necessary. On account of the fault in the electricity grid, the automatic milking system consequently cannot operate for a certain time, so that the capacity of the system is reduced as a result. This is undesirable.

To avoid the above drawback, the device is designed in accordance with the characterizing clause of Claim 1. The result is that, in the event of a power failure, the device can continue to operate unaltered and can carry on milking without it being necessary for an operator to intervene. The fact that the equipment is suitable for direct current means that there is no need to additionally convert alternating current to direct current or vice versa, and consequently there are no unnecessary losses.

According to an improvement, the device is designed in accordance with Claim 2. In this way, the control units and the equipment which consume relatively high levels of power can each be provided with the voltage which is most suitable for the various applications. In this case, the control units are coupled to a low DC voltage which is suitable for electronic control units, and the motors and other power supplies are coupled to a high DC voltage, with the result that the current level in the lines to the motors and power supplies can remain limited.

According to a further improvement, the device is designed in accordance with Claim 3. As a result, it is possible for milking to continue until the electricity grid is operating again or the operator, having been warned, has taken appropriate measures.

According a further improvement, the device is designed in accordance with Claim 4. In this way, it is possible for the most usual power problems to be coped with without additional measures, since such problems generally do not last more than four hours.

According to a further improvement, the device is designed in accordance with Claim 5. This allows the batteries always to be as ready for use as possible.

According to a further improvement, the device is designed in accordance with Claim 6. In this case, the device can be used without loading the batteries.

According to a further improvement, the device is designed in accordance with Claim 7. As a result, the device can be used without the batteries being fully utilized, so that the batteries are available for a longer time.

According to a further improvement, the device is designed in accordance with Claim 8. As a result, the power supply can be partly or even completely taken over by a windmill, so that improved grid-independent usage is possible.

According to a further improvement, the device is designed in accordance with Claim 9. As a result, it is possible to make operation of the device independent of the electricity grid even for a prolonged period.

According to an improvement, the device is designed in accordance with Claim 10. As a result, the device can continue to operate in a simple way, even in the event of a power failure, by using means which are present at a farm.

The invention is explained below with reference to an exemplary embodiment and with the aid of a drawing, in which:
Figure 1 shows a diagrammatic plan view of a dairy farm, and
Figure 2 shows an electrical circuit diagram for supplying power to and controlling the various equipment used in the dairy farm shown in Figure 1.

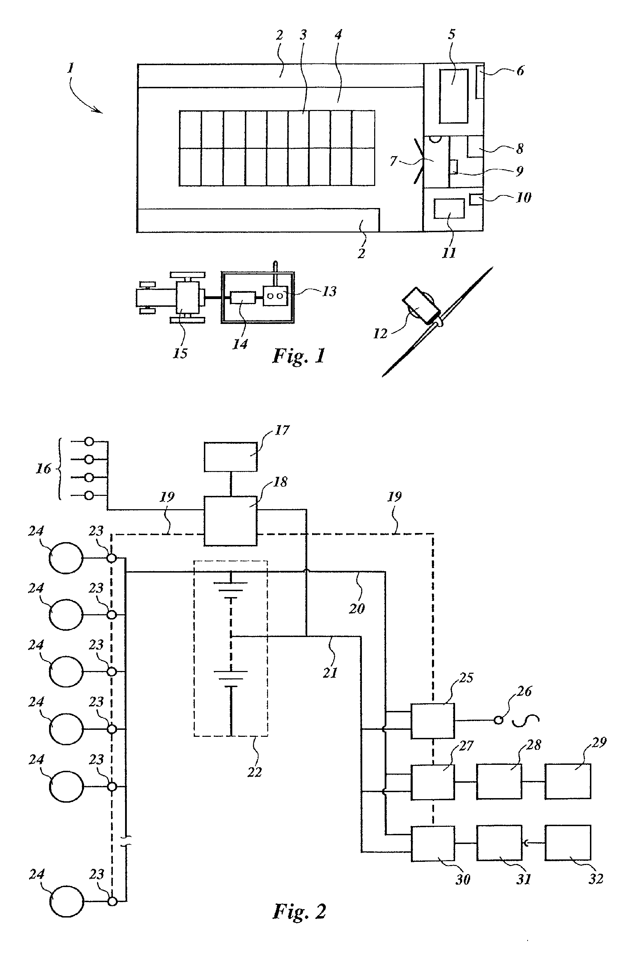

Figure 1 shows a shed 1 for keeping dairy animals. The shed 1 has a walkway 4, along which cows can move freely to and fro. In a known way, cubicles 3 are arranged in the centre of the walking area for the cows, and along one wall there is a feeding fence 2 containing roughage. In the drawing, the various components which are customary in a shed are shown purely diagrammatically or are not shown at all. It will be clear to the person skilled in the art that in a shed of this type there are also doors through which the animals can enter the shed, as well as feed troughs for the animals to eat concentrated feed, as well as features for discharging manure.

On one of the short sides of the shed 1 there are features for milking the animals. There is a milking stall 7 provided with a milking robot 9. The milking robot 9 can connect the milking cups (not shown) to the teats of the animals which are to be milked without supervision, so that milking can take place without interruption twenty-four hours a day. The milk which is taken is stored and refrigerated in a milk tank 5, for which purpose a cooling device 6 is provided. There are also the further features required for milking, such as a vacuum system for applying a vacuum in the milking cups and conveying milk through the various lines, and a cleaning system with a hot-water supply for cleaning the components through which milk flows. The various components of the milking device are controlled by a control unit 8.

Since the milking device is designed for uninterrupted use and there are no features for simultaneously milking a larger number of cows than is customary, there are features which make it possible for the milking to continue in the ordinary way when the electricity grid fails. For this purpose, there are batteries 11 which supply the electric power for the various control units and motors even when the normal power supply is interrupted. The control unit and the motors are able to use the DC voltage supplied by the batteries 11. The batteries are charged by a rectifier 10 which, for example, is coupled to the electricity grid. To supply the batteries 11 in the event of a prolonged power failure there is a generator 14 which can be driven by a motor 13 or by a tractor 15. The generator 14 is a DC generator or is provided with a rectifier. To use inexpensive energy or to relieve the load on the electricity grid, there is a windmill 12, by means of which energy can be supplied to the batteries 11 during normal operation and also in the event of a power failure.

Figure 2 diagrammatically depicts the way in which the milking device is provided with power. The milking device comprises DC motors 24 which are provided with voltage from a DC power supply with a high voltage 20 via motor control means 23. The motor control means 23 are actuated by a control unit 18 via a signal line 19. The control unit 18 is provided with an operating panel 17. Sensors 16 are likewise coupled to the control unit 18 and detect that the devices function and provide the remaining observations required for operation of the device, such as the movements of the animals which are to be milked. The control unit 18 is coupled to a DC power supply with low voltage 21.

The DC power supply for high voltage 20 and the DC power supply for low voltage 21 are coupled to batteries 22 which are designed in such a manner that both a high voltage and a low voltage can be supplied.

For charging the batteries 22, they are coupled, via one or both DC power supply 20 and 21, to a first converter 25, which is coupled to the electricity grid via a grid connection 26. Via a second converter 27, one or both DC mains 20 and 21 are also coupled to a generator 28, which is driven by vanes 29 of a windmill. The generator 28 supplies alternating current, the frequency of which is dependent on the rotational speed of the vanes 29. The fact that the current supplied by the generator 28 is converted to direct current means that the rotational speed of the vanes 29 may vary and may be dependent on the wind speed. If the vanes 29 and the generator 28 are suitable for a power which is higher than the power consumed by the motors 24 and the control unit 18, there are, in a known way, means for supplying energy to the electricity grid if the batteries 22 do not need recharging or only need to be recharged to a limited extent. In that case, the first converter 25 is also able to act as a converter for converting direct current to alternating current which is suitable for the electricity grid.

To ensure that power is supplied in the event of a power failure from the electricity grid over a prolonged time, even if there is no wind, there is a generator 31 which can be driven by a motor 32. The generator 31 is likewise coupled to one or both DC power supply 20 and 21. The motor 32 may be a stationery motor or may optionally be a tractor which is coupled to the generator 31 if required.

The device operates as follows. During normal use, power is consumed from the electricity grid via the grid connection 26 and is converted by the first converter 25 into direct current, which is used to supply a milking device, having, inter alia, DC motors 24, control unit 18, which corresponds to the control unit 8, and the sensors 16. Also, if necessary, the batteries 22 are supplied with the direct current. If there is sufficient wind, so that the windmill 12 can supply energy through the rotation of the generator 28, the DC power supplies 20 and 21 are also supplied from the second converter 27. If the power supplied by the windmill 12 is greater than the power consumed from the DC power supplies 20 and 21, the excess power which is generated is fed to the electricity grid via the first converter 25. If the provision of electricity from the electricity grid is interrupted, this is signalled in the control unit 18. The energy will then be supplied from the batteries 22 and if appropriate by the generator 28 of the windmill. If the generator 28 of the windmill 12 supplies more energy than the DC power supplies 20 and 21 are able to consume, the energy supply from the windmill 12 is reduced in a known way, for example by resetting the vanes 29.

If the generator 28 of the windmill 12 provides insufficient power, the batteries 22 will be activated, so that milking can continue undisturbed. The control unit 12 will call the operator, and if appropriate some components will be switched off temporarily and/or the motor 32 of the generator 31 will be started. In one embodiment, it is also possible for all this to take place automatically, so that the automatic milking can continue undisturbed without any intervention from the operator.

In addition to the above-described embodiment with a DC power supply, it is also possible, in a simple embodiment, for the equipment used for milking to be designed in the usual way, i.e. for the motors and the control unit to be connected to an AC voltage power supply in the customary way. In the event of a failure in the AC power supply, the milking device is coupled to a standby power supply, with energy which is present in batteries being converted into AC voltage via a converter. A windmill is also designed in such a manner that the energy which is generated is converted into alternating voltage. There is a control unit that ensures that, in the event of a surplus of power generated by the windmill, this energy is stored in batteries. This excess energy can also be used, for example, for additional cooling of the milk, so that when the power generated by the windmill becomes less than the direct consumption, the cooling of the milk can be switched off for a period of time.

The windmill is preferably designed as a synchronous generator which is driven at a variable speed by vanes, the alternating voltage at a variable frequency which is generated by the synchronous generator being converted into DC voltage by a rectifier. This DC voltage is converted into alternating voltage at a constant frequency by a converter. The converter is designed in such a manner that it can also function as a means for improving the grid and can generate alternating current with an adjustable phase angle between current and voltage. In this way, it is possible to improve the quality of the alternating voltage available to the milking device. The converter can fulfil this function even if no current is being supplied by the generator, for example when there is no wind. There is also a possible embodiment of the milking device in which there is only one converter, which functions as a means for improving the grid and the problems which may arise in the grid as a result of the distance between the transformer and the farm being very great. If appropriate, there is a control unit which automatically adapts the settings of the converter in the event of changes in consumption by the milking device and/or in the event of changes in the grid at the farm. The converter is designed in a known way, with switchable IGBTs or similar components which, for example, function during the generation of alternating voltage on the basis of pulse width modulation.

## Claims

1. Device for automatically milking animals, having electric drives (24) and control units (16, 18) which are coupled to an electricity grid (26) comprising standby power means (22) for providing the electric drives and control units with power in the event of failures in the electricity grid, **characterized in that** the control units and the drives are coupled to a DC mains (20, 21) for supplying direct current from batteries (22).

2. Device according to Claim 1 or 2, **characterized in that** the DC mains (20, 21) is suitable for supplying direct current at a first, low voltage and a second, high voltage.

3. Device according to Claim 1 or 2, **characterized in that** the batteries (22) are suitable for automatic milking using the device for at least one hour.

4. Device according to Claim 3, **characterized in that** the batteries (22) are suitable for automatic milking using the device for at least four hours.

5. Device according to one of the preceding claims, **characterized in that** there are rectifier means for coupling the electricity grid to the DC power supply.

6. Device according to Claim 5, **characterized in that** the rectification capacity of the rectifier means is at least equal to the power of the electric drives and control units.

7. Device according to one of the preceding claims, **characterized in that** one or more generators are coupled to the DC power supply.

8. Device according to Claim 7, **characterized in that** a generator is coupled to a wind turbine.

9. Device according to Claims 7 or 8, **characterized in that** a generator is coupled to an internal combustion engine.

10. Device according to Claim 9, **characterized in that** the internal combustion engine is mounted in a vehicle.
